# EUROPEAN PATENT APPLICATION

(11) **EP 3 987 909 A1**
(43) Date of publication of application: **27.04.2022**
(21) Application number: 21203052.2
(22) Date of filing: 18.10.2021
(51) Int. Cl.: A01D 41/14, A01B 63/10, A01B 63/108, A01B 59/06

(54) **AUTOMATED HEADER FLOATATION ADJUSTMENT SYSTEM FOR AN AGRICULTURAL MACHINE**

(30) Priority: 21.10.2020 US 202017075847
(71) Applicant: Deere & Company, Moline, IL 61265 (US)
(72) Inventor: KRAUS, TIMOTHY J, 68163 Mannheim (DE); KARST, AUSTIN J, 68163 Mannheim (DE)
(74) Representative: Stein, Stefan

(57) **Abstract**

An agricultural machine (20) includes a controller (100) disposed in communication with a implement linkage system (42), an output (94), and an input (96). The controller is operable to identify a selected work implement from a plurality of different work implements (44). A desired operating condition is then solicited from an operator via the output (94). A selection command is received from the operator via the input indicating which of a float operating condition and a fixed height operating condition is the desired operating condition. The controller (100) may then automatically determine a recommended operating setting for the implement linkage system (42) for the selected work implement and the desired operating condition and notify the operator of the recommended operating setting for the implement linkage system for the selected work implement and the desired operating condition via the output.

## Description

### TECHNICAL FIELD

The disclosure generally relates to an agricultural machine configured to support an attachable work implement, and a method of controlling the agricultural machine.

### BACKGROUND

Some agricultural machines are configured to receive or connect to an attachable work implement. The work implement may include, but is not limited to, a crop harvesting head for harvesting crop material, or a cutter head for cutting standing crop material. Such agricultural machines may be configured to operate with several different styles and/or sizes of work implements. Each different size and/or style of work implement may have different recommended operating settings for a implement linkage system connecting the work implement to the agricultural vehicle.

The agricultural machine and the attached work implement may be configured to cut different crop materials. The crop materials may include, but are not limited to, forages and grains. Because the crop materials have different characteristics, the implement linkage system and work implements may have to be positioned differently for different crop materials, or different work implements may have to be used for different crop materials.

As noted above, the work implement may include a cutter head for cutting standing crop materials. Two commonly used styles of cutter heads include rotary style cutter heads, which are often used for cutting forage crops, and draper style cutter heads which are often used for cutting grain crops. Each of the rotary style cutter heads and the draper style cutter heads may additionally come in different sizes. Because the draper style cutter heads are often used to cut grain crops, which are often close to a ground surface, the implement linkage system is may be operated in a float operating condition that allows the cutter head to vertically track the ground surface during horizontal movement over the ground surface. The rotary style cutter heads are often used to cut forage crops, which are formed into a windrow. It is desirable to leave crop stubble of a certain height to position the windrow above the ground surface. For this reason, rotary style cutter heads may be operated using a fixed height operating condition that fixes a position of the selected work implement relative to agricultural machine during horizontal movement over the ground surface.

It is useful for the operator of the agricultural machine to know which operating condition, i.e., the float operating condition or the fixed height operating condition, the implement linkage system is currently configured for. Additionally, in order to operate either the rotary style cutter heads or the draper style cutter heads in either the float operating condition or the fixed height operating conditions, the implement linkage system must be controlled to exhibit certain operating settings. The operating settings for each respective or different cutter head are dependent upon the specific weight, size, length, etc. of that specific cutter head. As such, each time a different cutter head is attached to the agricultural machine, or each time the cutter head is changed from the float operating condition to the fixed-height operating condition, the operating settings for the implement linkage system may require changes.

### SUMMARY

An agricultural machine is provided. The agricultural machine includes a frame, and an implement linkage system attached to the frame. The implement linkage system is configured for attaching a selected work implement from a plurality of different work implements to the frame. The implement linkage system is controllable between a float operating condition allowing the selected work implement to vertically track a ground surface during horizontal movement over the ground surface, and a fixed height operating condition fixing a position of the selected work implement relative to the frame during horizontal movement over the ground surface. An output is operable to convey a message to an operator, and an input is operable to receive instructions from the operator. A controller is disposed in communication with the implement linkage system, the output, and the input. The controller includes a processor and a memory having a implement attachment and control algorithm stored thereon. The processor is operable to execute the implement attachment and control algorithm to identify the selected work implement from the plurality of different work implements. A desired operating condition is then solicited from the operator via the output. The desired operating condition is one of the float operating condition or the fixed height operating condition. A selection command is received from the operator via the input. The selection command indicates which of the float operating condition and the fixed height operating condition is the desired operating condition. The controller may then automatically determine a recommended operating setting for the implement linkage system for the selected work implement and the desired operating condition. The controller may determine the recommended operating setting from a database including a respective recommended operating setting for each of the plurality of different work implements. The controller may then notify the operator of the recommended operating setting for the implement linkage system for the selected work implement and the desired operating condition via the output.

In one aspect of the disclosure, the agricultural machine includes an attachment identifier that is disposed in communication with the controller. The attachment identifier is operable to identify the selected work implement from the plurality of different work implements. The attachment identifier may include, but is not limited to a camera positioned to capture an image of the selected work implement, or a transponder/receiver, such as an RFID reader, that is positioned to read an RFID tag attached to the selected work implement.

In one aspect of the disclosure, the controller may solicit instructions from the operator via the output regarding a desired attachment identification technique for identifying the selected work implement. The desired attachment identification technique may include one of an automatic technique using the attachment identifier, or a manual entry technique. When the operator selects the automatic technique, the controller engages the attachment identifier to identify the selected work implement. When the operator selects the manual entry technique, the controller may request identification data related to the selected work implement from the operator via the output. The controller may then receive the identification data via the input from the operator.

In one aspect of the disclosure, the controller may solicit a desired adjustment of the recommended operating setting from the operator via the output. If the operator desires an adjustment, the controller may receive a commanded adjustment to the recommended operating setting from the operator via the input to define an adjusted operating setting. The controller may then control the implement linkage system to exhibit the adjusted operating setting. If the operator does not desire an adjustment, the controller may receive an apply recommended operating setting command from the operator via the input. The controller may then control the implement linkage system to exhibit the recommended operating setting in response to the apply recommended operating setting command.

In one aspect of the disclosure, the implement linkage system includes a lift cylinder for controlling a height of the selected work implement during operation in the fixed height operating condition, and a left float cylinder coupled to a left accumulator and a right float cylinder coupled to a right accumulator for controlling float of the selected work implement during operation in the float operating condition. The lift cylinder, the right float cylinder, and the left float cylinder are controlled by the controller based on the recommended operating setting.

A method of controlling an agricultural machine is also provided. The agricultural machine includes a implement linkage system attached to a frame. The implement linkage system is configured for attaching a selected work implement from a plurality of different work implements to the frame. The implement linkage system is controllable between a float operating condition allowing the selected work implement to vertically track a ground surface during horizontal movement over the ground surface, and a fixed height operating condition fixing a position of the selected work implement relative to the frame during horizontal movement over the ground surface. The method includes identifying the selected work implement from the plurality of different work implements. A desired operating condition is solicited from an operator via an output. The desired operating condition is one of the float operating condition or the fixed height operating condition. A selection command is received from the operator via an input. The selection command indicates which of the float operating condition and the fixed height operating condition is the desired operating condition. A recommended operating setting for the implement linkage system for the selected work implement and the desired operating condition may then be automatically determined from a database with a controller. The database includes a respective recommended operating setting for each of the plurality of different work implements. The operator may then be notified of the recommended operating setting for the implement linkage system for the selected work implement and the desired operating condition via the output.

In one aspect of the disclosure, the agricultural machine includes an attachment identifier in communication with the controller. The method further includes soliciting instructions from the operator via the output regarding a desired attachment identification technique for identifying the selected work implement. The desired attachment identification technique may include one of an automatic technique using the attachment identifier, or a manual entry technique.

In one aspect of the disclosure, when the operator selects the automatic technique, the selected work implement is identified from the plurality of different work implements by engaging the attachment identifier to identify the selected work implement.

In one aspect of the disclosure, when the operator selects the manual entry technique, the controller requests identification data related to the selected work implement from the operator, via the output, in order to identify the selected work implement.

In one aspect of the disclosure, the controller may solicit a desired adjustment of the recommended operating setting from the operator via the output. If the operator desires an adjustment, the controller may receive a commanded adjustment to the recommended operating setting from the operator via the input to define an adjusted operating setting. The controller may then control the implement linkage system to exhibit the adjusted operating setting. If the operator does not desire an adjustment, then the controller may receive an apply recommended operating setting command via the input. The controller may then control the implement linkage system to exhibit the recommended operating setting.

The agricultural machine and method described herein display the desired operating condition on the output so that the operator may know which operating condition the implement linkage system is currently configured for. Additionally, the controller may automatically determine the recommended operating settings for the selected work implement and the selected operating condition, thereby saving the operator time.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic perspective view of an agricultural machine with a rotary cutter head attached.
FIG. 2 is a schematic perspective view of the agricultural machine with a draper cutter head attached.
FIG. 3 is a schematic diagram of a hydraulic system of the agricultural machine.
FIG. 4 is a schematic perspective view of a frame and a implement linkage system of the agricultural machine.
FIG. 5 is a flowchart representing a method of controlling the agricultural machine.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

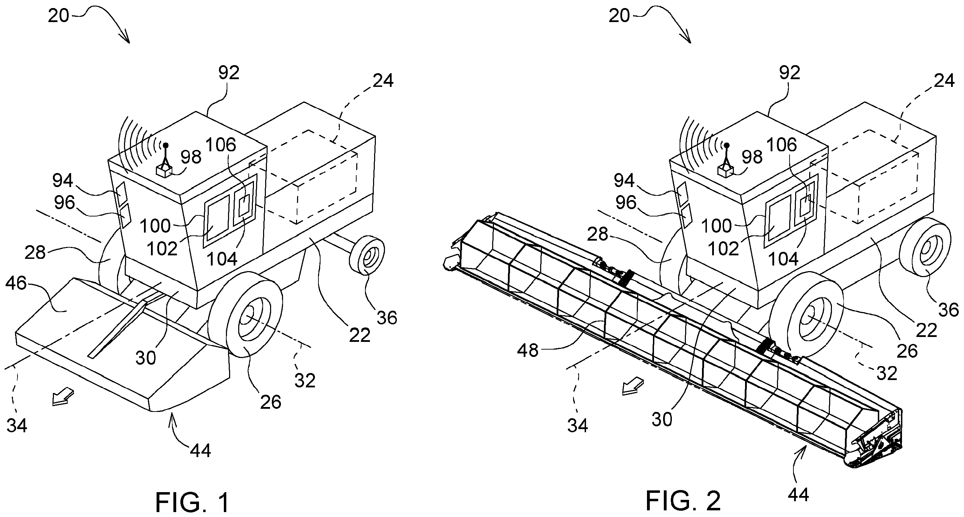

Referring to the Figures, wherein like numerals indicate like parts throughout the several views, an agricultural machine is generally shown at 20 in FIGS. 1 and 2. The example embodiment of the agricultural machine 20 shown in FIGS. 1 and 2 includes, but is not limited to, a self-propelled windrower. However, it should be appreciated that the teachings of this disclosure may be applied to machines other than the example windrower depicted in FIGS. 1 and 2.

Referring to FIGS. 1 and 2, the agricultural machine 20 includes a frame 22, which supports a prime mover 24. The prime mover 24 may include, but is not limited to, an internal combustion engine, an electric motor, a combination of both, or some other device capable of generating torque to power the agricultural machine 20. A left front drive wheel 26 and a right front drive wheel 28 are each mounted to the frame 22, adjacent a forward end 30 of the frame 22. The left front drive wheel 26 and the right front drive wheel 28 are rotatable about a transverse axis 32. The transverse axis 32 is generally perpendicular to a longitudinal axis 34 of the frame 22.

As understood by those skilled in the art, the left front drive wheel 26 and the right front drive wheel 28 may be simultaneously rotated in the same rotational direction and at the same rotational speed about the transverse axis 32 to drive the agricultural machine 20 forward or rearward, depending upon the direction of rotation. Additionally, the left front drive wheel 26 and the right front drive wheel 28 may be rotated in the same rotational direction at different rotational speeds about the transverse axis 32, or in opposite rotational directions at the same or different rotational speeds about the transverse axis 32, in order to turn the agricultural vehicle.

Referring to FIGS. 1 and 2, the agricultural machine 20 further includes a left rear caster wheel 36 and a right rear caster wheel (not shown) attached to the frame 22. As used herein, the term "caster wheel" should be understood to include a wheel that is able to rotate a full three hundred sixty degrees (360°) about a respective generally vertical axis. As such, each of the left rear caster wheel 36 and the right rear caster wheel are rotatable a full three hundred sixty degrees (360°) about a respective generally vertical axis. The left rear caster wheel 36 and the right rear caster wheel may be attached to the frame 22 in a suitable manner. The specific manner in which the left rear caster wheel 36 and the right rear caster wheel are attached to the frame 22 is not pertinent to the teachings of this disclosure, are understood by those skilled in the art, and are therefore not described in detail herein.

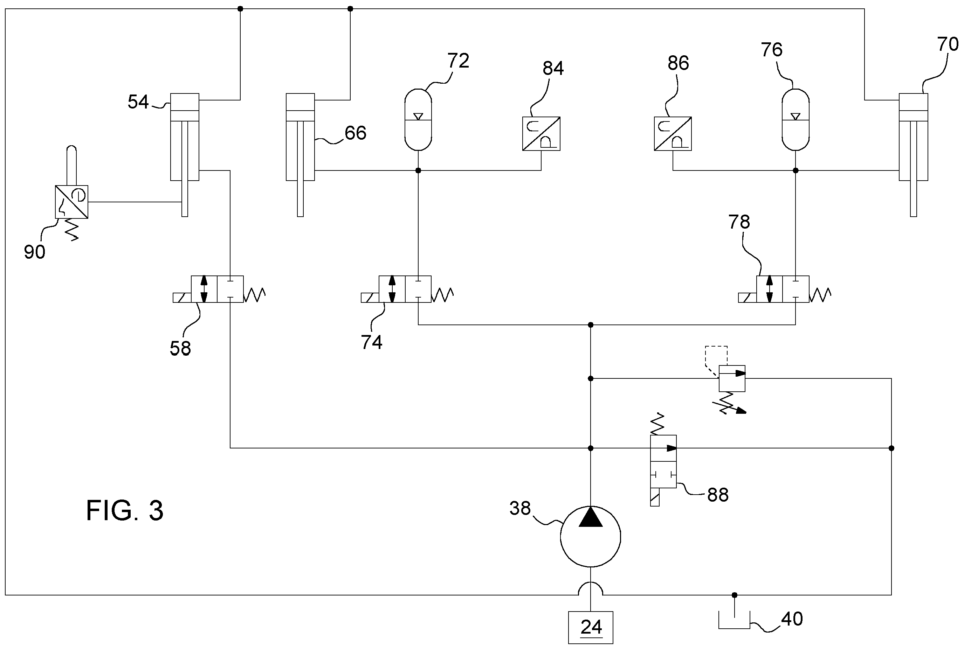

Referring to FIG. 3, the agricultural machine 20 includes a hydraulic system. The hydraulic system includes a pressure source 38 configured to supply a flow of pressurized fluid. The pressure source 38 may include, but is not limited to, an auxiliary fluid pump that is drivenly coupled to the prime mover 24. The pressure source 38 draws fluid from a tank 40, and circulates the fluid through the hydraulic system. The tank 40 receives the fluid from the hydraulic system, stores the fluid, and supplies the fluid to the pressure source 38, e.g., the auxiliary fluid pump. Fluid flow and/or pressure may be used to operate various components of the agricultural machine 20, as described in greater detail below.

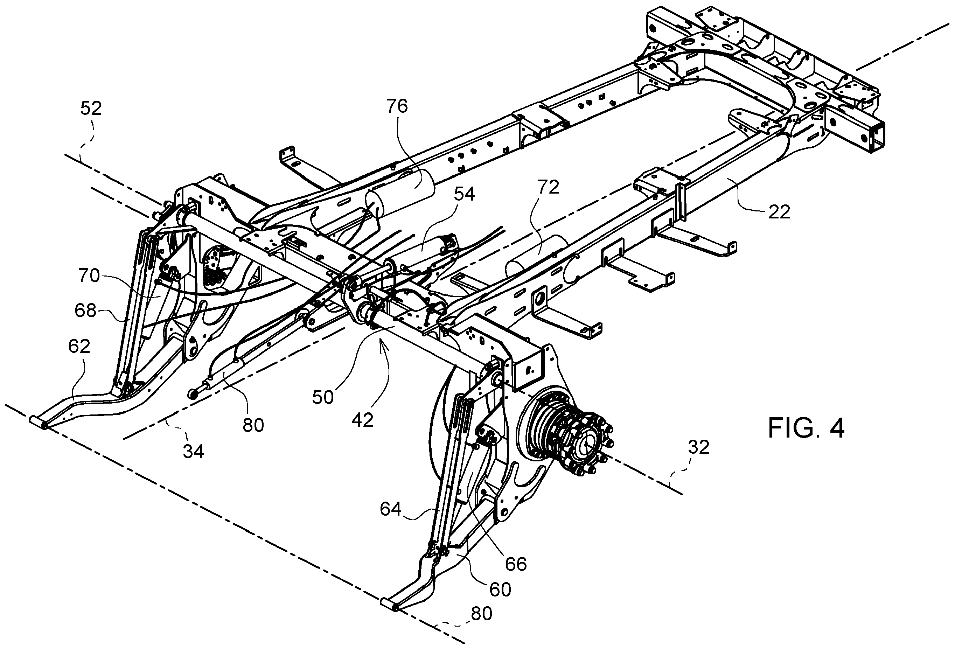

Referring to FIG. 4, the agricultural machine 20 includes an implement linkage system 42 attached to the frame 22. In the implementation shown in the Figures and described herein, the implement linkage system 42 is attached to the frame 22 adjacent the forward end 30 of the frame 22. The implement linkage system 42 is configured for attaching a selected work implement 44 from a plurality of different work implements to the frame 22. In the example implementation shown in the Figures and described herein, the plurality of different work implements may include a rotary cutter 46 such as shown in FIG. 1, or a draper cutter 48 such as shown in FIG. 2. It should be appreciated that the plurality of different work implements may further include different sizes of each of the rotary cutter 46 and the draper cutter 48. Additionally, it should be appreciated that the work implements may include devices other than the example draper cutter 48 and the example rotary cutter 46, and that the agricultural machine 20 is not limited to the self-propelled windrower shown in the figures and desired herein.

Referring to FIGS. 3 and 4, the implement linkage system 42 includes a rockshaft 50 rotatably mounted to the frame 22 for rotational movement about a shaft axis 52 that extends transverse to the longitudinal axis 34 of the frame 22. A lift cylinder 54 is attached to and interconnects the rockshaft 50 and the frame 22. The lift cylinder 54 is operable to rotate the rockshaft 50 about the shaft axis 52 in order to raise and lower the selected work implement 44er relative to a ground surface. As such, the lift cylinder 54 is operated to control a vertical height of the selected work implement 44 above the ground surface. In the example implementation described herein, the lift cylinder 54 is a single acting hydraulic cylinder disposed in fluid communication with the hydraulic system. A lift control valve 58 controls fluid communication between the lift cylinder 54 and the pressure source 38. In other embodiments, the lift cylinder 54 may include a double acting hydraulic cylinder, an electrically actuated linear actuator, or some other device capable of extending and retracting. The lift cylinder 54 extends in response to fluid pressure and/or flow from the hydraulic system in the usual manner, and is retracted by gravitational forces acting on the implement linkage system 42 and/or the selected work implement 44 attached to the implement linkage system 42 as understood by those skilled in the art.

The implement linkage system 42 further includes a left connecting arm 60 and a right connecting arm 62. The left connecting arm 60 is rotatably attached to the frame 22 below the rockshaft 50, on a left side of the frame 22. A left linkage 64 is attached to and interconnects the left connecting arm 60 and the rockshaft 50. A left float cylinder 66 is attached to and interconnects the frame 22 and the left linkage 64. A respective forward end 30 of the left float cylinder 66 is attached to the left linkage 64. The left float cylinder 66 extends rearward and vertically upward to a respective rearward end of the left float cylinder 66, which is attached to the frame 22. The right connecting arm 62 is rotatably attached to the frame 22 below the rockshaft 50, on a right side of the frame 22. A right linkage 68 is attached to and interconnects the right connecting arm 62 and the rockshaft 50. A right float cylinder 70 is attached to and interconnects the frame 22 and the right linkage 68. A respective forward end 30 of the right float cylinder 70 is attached to the right linkage 68. The right float cylinder 70 extends rearward and vertically upward to a respective rearward end of the right float cylinder 70, which is attached to the frame 22.

The left float cylinder 66 is disposed in fluid communication with a left accumulator 72. The left float cylinder 66 and the left accumulator 72 cooperate to form a volume. Fluid pressure within the volume defined by the left float cylinder 66 and the left accumulator 72 may be controlled to provide a resistance against retraction or compression of the left float cylinder 66. A left float control valve 74 controls fluid communication between the left float cylinder 66 and the pressure source 38. The right float cylinder 70 is disposed in fluid communication with a right accumulator 76. The right float cylinder 70 and the right accumulator 76 cooperate to form a volume. Fluid pressure within the volume defined by the right float cylinder 70 and the right accumulator 76 may be controlled to provide a resistance against retraction or compression of the right float cylinder 70. A right float control valve 78 controls fluid communication between the right float cylinder 70 and the pressure source 38. The left float cylinder 66 and the right float cylinder 70 are each operable to provide a bias or resistance force against upward movement of the left connecting arm 60 and the right connecting arm 62 respectively.

In the example implementation described herein, the left float cylinder 66 and the right float cylinder 70 are each single acting hydraulic cylinders disposed in fluid communication with the hydraulic system. In other embodiments, the left float cylinder 66 and the right float cylinder 70 may include a double acting hydraulic cylinder, an air cushion or spring device, or some other device capable of biasing the left connecting arm 60 and the right connecting rod downward toward the ground surface.

The implement linkage system 42 may further include a tilt cylinder 80. The tilt cylinder 80 is attached to and interconnects the frame 22 and the selected work implement 44 attached to the implement linkage system 42. The tilt cylinder 80 is operable to rotate the selected work implement 44 attached to the implement linkage system 42 relative the ground surface. More specifically, the tilt cylinder 80 rotates the selected work implement 44 about a tilt axis 82, which extends transverse to the longitudinal axis 34 of the frame 22 and through distal ends of the left connecting arm 60 and the right connecting arm 62. In the example implementation described herein, the tilt cylinder 80 is a double acting hydraulic cylinder disposed in fluid communication with the hydraulic system. In other embodiments, the tilt cylinder 80 may include a single acting hydraulic cylinder, an electrically actuated linear actuator, or some other device capable of extending and retracting. The tilt cylinder 80 extends and retracts in response to fluid pressure and/or flow from the hydraulic system in the usual manner as understood by those skilled in the art.

The implement linkage system 42 is controllable between a float operating condition and a fixed height operating condition. When configured for the float operating condition, the implement linkage system 42 allows the selected work implement 44 to vertically track the ground surface during horizontal movement of the agricultural machine 20 over the ground surface. When configured for the float operating condition, the lift control valve 58 is closed to block fluid communication between the pressure source 38 and the lift cylinder 54. A return valve 88 may be opened to allow fluid communication between the lift cylinder 54 and the tank 40, which allows the lift cylinder 54 to extend and retract freely. Additionally, when the implement linkage system 42 is configured for the float operating condition, a desired amount of fluid pressure is supplied to the left float cylinder 66 and the right float cylinder 70 to provide a desired amount of resistance against upward vertical movement, thereby keeping the selected work implement 44 in contact with the ground surface while allowing the selected work implement 44 to track the ground surface. A left pressure sensor 84 may be included to sense and monitor the fluid pressure applied to the left float cylinder 66. Similarly, a right pressure sensor 86 may be included to sense and monitor the fluid pressure applied to the right float cylinder 70.

The fixed height operating condition fixes a position of the selected work implement 44 relative to the frame 22 during horizontal movement of the agricultural machine 20 over the ground surface. When the implement linkage system 42 is configured in the fixed height operating condition, the return valve 88 is closed, and the lift control valve 58 is opened to allow fluid communication between the pressure source 38 and the lift cylinder 54 to extend the lift cylinder 54 to a desired position and position the selected work implement 44 at a desired height above the ground surface, after which the lift control valve 58 is closed to block fluid communication between the pressure source 38 and the lift cylinder 54 to secure the lift cylinder 54 in the desired position. A position sensor 90 may be positioned to sense a position of the lift cylinder 54 and/or a position of the selected work implement 44 to determine the position of the selected work implement 44 relative to the ground surface. Once the position of the lift cylinder 54 is set, the return valve 88 may be opened so that fluid flow from the pressure source 38 is directed to the tank 40.

The agricultural machine 20 further includes an operator station 92, which houses control components of the agricultural machine 20. The control components may include, but are not limited to, an output 94 and an input 96. The output 94 is operable to convey a message to an operator. The input 96 is operable to receive instructions from the operator. In the example implementation described herein, the input 96 and the output 94 are combined and implemented as a touch screen display. Messages may be communicated to the operator through the display, and data may be entered by the operator by touching the display as is understood by those skilled in the art. It should be appreciated that the input 96 and the output 94 may differ from the example implementation described herein and may be separate or combined components. For example, the output 94 may include, but is not limited to, a video only display, an audio speaker, a light board, etc. The input 96 may include, but is not limited to, a mouse, a keyboard, a microphone, etc.

The agricultural machine 20 may further include an attachment identifier 98. The attachment identifier 98 may be disposed in communication with a controller 100 and operable to identify the selected work implement 44 from the plurality of different work implements. In one implementation, the attachment identifier 98 may be embodied as a Radio Frequency Identification (RFID) reader. The RFID reader may emit a signal and receive a response from a RFID tag attached to the selected work implement 44. The response from the RFID tag of the selected work implement 44 may include identification data that identifies the selected work implement 44. The identification data may include, but is not limited to, a make and model of the selected work implement 44, a year of manufacture, a weight of the selected work implement 44, etc. The RFID reader may then communicate the identification data to the controller 100 for use as described below.

In an alternative implementation, the attachment identifier 98 may be embodied as an image sensor combined with image recognition software, the image recognition software may be saved on the controller 100 and executable by the controller 100. Upon the selected work implement 44 being positioned near the forward end 30 of the frame 22, the image sensor may capture an image of the selected work implement 44 and communicate that image to the image recognition software. The image recognition software may analyze the image to identify the selected work implement 44 and obtain the identification data therefore, for example, from a database including the identification data for each of the plurality of different work implements. The features and operation of image recognition software are known to those skilled in the art and are therefore not described in greater detail herein.

The controller 100 is disposed in communication with the input 96, the output 94, the attachment identifier 98, the lift cylinder 54, the left float cylinder 66 and the right float cylinder 70. The controller 100 is operable to receive data entry from the input 96, send messages through the output 94, receive identification data from the attachment identifier 98, and control the operation of the lift cylinder 54, the left float cylinder 66 and the right float cylinder 70. While the controller 100 is generally described herein as a singular device, it should be appreciated that the controller 100 may include multiple devices linked together to share and/or communicate information therebetween. Furthermore, it should be appreciated that all or parts of the controller 100 may be located on the agricultural machine 20 or located remotely from the agricultural machine 20.

The controller 100 may alternatively be referred to as a computing device, a computer, a controller, a control unit, a control module, a module, etc. The controller 100 includes a processor 102, a memory 104, and all software, hardware, algorithms, connections, sensors, etc., necessary to manage and control the operation of the input 96, the output 94, the attachment identifier 98, the lift cylinder 54, the left float cylinder 66 and the right float cylinder 70. As such, a method may be embodied as a program or algorithm operable on the controller 100. It should be appreciated that the controller 100 may include any device capable of analyzing data from various sensors, comparing data, making decisions, and executing the required tasks.

As used herein, "controller" is intended to be used consistent with how the term is used by a person of skill in the art, and refers to a computing component with processing, memory, and communication capabilities, which is utilized to execute instructions (i.e., stored on the memory 104 or received via the communication capabilities) to control or communicate with one or more other components. In certain embodiments, the controller 100 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The controller 100 may be in communication with other components on the agricultural machine 20, such as hydraulic components, electrical components, and operator inputs within the operator station 92. The controller 100 may be electrically connected to these other components by a wiring harness such that messages, commands, and electrical power may be transmitted between the controller 100 and the other components. Although the controller 100 is referenced in the singular, in alternative embodiments the configuration and functionality described herein can be split across multiple devices using techniques known to a person of ordinary skill in the art.

The controller 100 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices 96, 94, and communication interfaces, as well as signal conditioning and buffer electronics.

The computer-readable memory 104 may include any non-transitory/tangible medium which participates in providing data or computer-readable instructions. The memory 104 may be non-volatile or volatile. Non-volatile media may include, for example, optical or magnetic disks and other persistent memory. Example volatile media may include dynamic random access memory (DRAM), which may constitute a main memory. Other examples of embodiments for memory include a floppy, flexible disk, or hard disk, magnetic tape or other magnetic medium, a CD-ROM, DVD, and/or any other optical medium, as well as other possible memory devices such as flash memory.

The controller 100 includes the tangible, non-transitory memory 104 on which are recorded computer-executable instructions, including a implement attachment and control algorithm 106. The processor 102 of the controller 100 is configured for executing the implement attachment and control algorithm 106. The implement attachment and control algorithm 106 implements a method of controlling the agricultural machine 20, described in detail below.

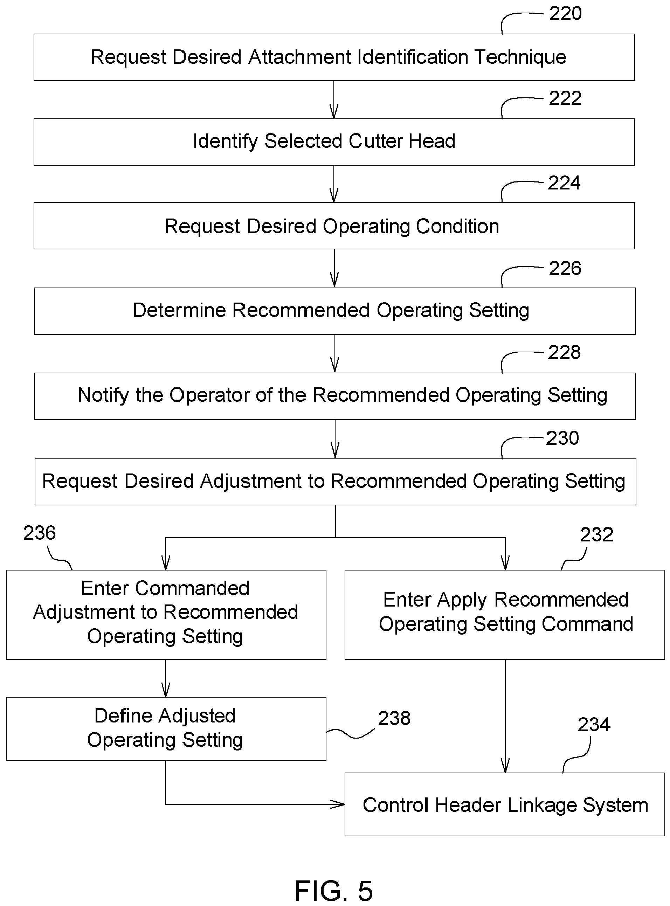

When a new selected work implement 44 is positioned near the front of the agricultural machine 20, and the agricultural machine 20 is equipped with the attachment identifier 98, the method includes soliciting instructions from the operator regarding a desired attachment identification technique for identifying the selected work implement 44. The step of requesting the desired attachment identification technique is generally indicated by box 220 in FIG. 5. The request or solicitation may be made using the output 94 displaying a message to the operator, requesting that the operator select the desired attachment identification technique. The possible attachment identification techniques may include, but are not limited to, an automatic technique using the attachment identifier 98, or a manual entry technique. If the agricultural machine 20 is not equipped with attachment identifier 98, then the controller 100 may proceed to request identification data related to the selected work implement 44 following the manual entry technique described below.

In response to the controller 100 requesting the desired attachment identification technique from the operator, the operator may respond by entering a selection into the input 96, thereby defining the desired attachment identification technique as one of the automatic technique, or the manual entry technique. The controller 100 may then proceed to identify the selected work implement 44 from the plurality of different work implements. The step of identifying the selected work implement is generally indicated by box 222 in FIG. 5.

When the operator selects the automatic technique, the controller 100 engages the attachment identifier 98 to identify the selected work implement 44. As described above, the attachment identifier 98 may be implemented in different manners. For example, if the attachment identifier 98 includes the RFID reader, the engaging the attachment identifier 98 may include emitting a signal from the RFID reader, and receiving a response signal from the RFID tag attached to the selected work implement 44. The response signal from the RFID tag may include the identification data that identifies the make, model, and/or properties of the selected work implement 44. If the selected work implement 44 does not include the RFID tag and the RFID reader fails to receive the response signal, then the controller 100 may proceed to identify the selected work implement 44 using the manual entry technique, described below.

Alternatively, if the attachment identifier 98 includes an image sensor and image recognition software, then the controller 100 may engage the image sensor to capture an image of the selected work implement 44, and then proceed to use the image recognition software to analyze and identify the make, model, and/or properties of the selected work implement 44. If the image recognition software is unable to identify the selected work implement 44, then the controller 100 may proceed to identify the selected work implement 44 using the manual entry technique described below.

When the operator selects the manual entry technique the controller 100 may request the identification data related to the selected work implement 44 from the operator. The request or solicitation may be made using the output 94 displaying a message to the operator, requesting that the operator enter the requested identification data for the selected work implement 44. For example, the controller 100 may request that the operator enter a make and model of the controller 100. In other implementations, the controller 100 may request that the operator enter a width, length, and weight of the selected work implement 44. In response to the controller 100 requesting the identification data from the selected work implement 44 from the operator, the operator may respond by entering the identification data into the input 96.

Once the controller 100 has identified the selected work implement 44, or otherwise obtained the identification data for the selected work implement 44, the controller 100 may then solicit or request a desired operating condition from the operator. The step of requesting the desired operating condition is generally indicated by box 224 in FIG. 5. The request or solicitation may be made using the output 94 displaying a message to the operator, requesting that the operator select the desired operating condition. The possible operating conditions may include, but are not limited to, the float operating condition, or the fixed height operating condition.

In response to the request or solicitation for the desired operating condition, the controller 100 may then receive a selection command from the operator. The selection command may be entered by the operator with the input 96. The selection command indicates which of the float operating condition and the fixed height operating condition is the desired operating condition. Depending upon the input 96, the selection command may be made by pressing a button on a touch screen display, by keying in the desired operating condition, by selecting a button with a mouse, by speaking the desired operating condition, or by some other manner of data entry.

Once the controller 100 has obtained the desired operating condition and has identified the selected work implement 44, the controller 100 may then automatically determine a recommended operating setting for the implement linkage system 42 for the selected work implement 44 and the desired operating condition. The step of determining the recommended operating setting is generally indicated by box 226 in FIG. 5. The controller 100 may make this determination by, for example, referencing a database or look-up table that includes a respective recommended operating setting for each of the plurality of different work implements for each of the operating conditions. The database may be stored in the memory 104 of the controller 100 on the agricultural machine 20, or may be stored remote from the agricultural machine 20, in which case the controller 100 may communicate with the remote memory 104 to access the database.

The recommended operating setting may include, but is not limited to, at least one control setting for the implement linkage system 42 for the desired operating condition. For example, when the desired operating condition is defined as the fixed height operating condition, the recommended operating setting may include a recommended operating height for the specific selected work implement 44. Additionally, the recommended operating setting may include multiple recommendations for different crop types and/or terrain types such as flat, hilly, uneven, sloped, etc. When the desired operating condition is defined as the float operating condition, the recommended operating setting may include a recommended fluid pressure in the left float cylinder 66 and the right float cylinder 70 for the specific selected work implement 44. Additionally, the recommended operating setting may include multiple recommendations for different terrain types, such as flat, hilly, uneven, sloped, etc., or field conditions such as dry, moderately wet, saturated, etc.

Once the controller 100 has determined the recommended operating setting for the selected work implement 44 and the desired operating condition, the controller 100 may notify the operator of the recommended operating setting for the implement linkage system 42. The step of notifying the operator of the recommended operating setting is generally indicated by box 228 in FIG. 5. The notification may be made using the output 94 by displaying or otherwise presenting a message to the operator.

Additionally, at or after the time the controller 100 notifies the operator of the recommended operating setting, the controller 100 may further request or solicit a desired adjustment of the recommended operating setting from the operator. The step of requesting the desired adjustment of the recommended operating setting is generally indicated by box 230 in FIG. 5. The request or solicitation may be made using the output 94 by displaying a message to the operator, requesting that the operator enter an apply command instructing the controller 100 to execute or apply the recommended operating setting, or enter commanded adjustment to the recommended operating setting.

When no adjustment to the recommended operating setting is requested or desired by the operator, then the operator may enter an apply recommended operating setting command. The step of entering the apply recommended operating setting command is generally indicated by box 232 in FIG. 5. The operator may enter the apply recommended operating setting command using the input 96, such as by selecting a button on the touch screen display, clicking a button with a mouse, entering the command via a keyboard, speaking the command, etc. Upon receiving the apply recommended operating setting command from the operator, the controller 100 may proceed to control the implement linkage system 42 to exhibit the recommended operating setting. The step of controlling the implement linkage system 42 is generally indicated by box 234 in FIG. 5. The controller 100 may control the implement linkage system 42, for example, by opening and/or closing respective fluid control valves for the lift cylinder 54, the left float cylinder 66 and/or the right float cylinder 70 as needed to implement the recommended operating setting.

In response to the request or solicitation for a desired adjustment of the recommended operating setting, if the operator desires an adjustment to the recommended operating setting, the operator may enter a commanded adjustment to the recommended operating setting by using the input 96. The step of entering the commanded adjustment to the recommended operating setting is generally indicated by box 236 in FIG. 5. The desired adjustment may depend upon the desired operating condition. For example, if the desired operating condition is the fixed height operating condition, then the desired adjustment may include an increase or a decrease in the recommended height of the selected work implement 44. Alternatively, if the desired operating condition is the float operating condition, then the desired adjustment may include, but is not limited to, an increase or decrease in the recommended fluid pressure setting for the left float cylinder 66 and/or the right float cylinder 70.

In response to the controller 100 receiving a commanded adjustment to the recommended operating setting from the operator, the controller 100 may adjust the recommended operating setting based on the commanded adjustment to define an adjusted operating setting. The step of defining the adjusted operating setting is generally indicated by box 238 in FIG. 5. The controller 100 may proceed to control the implement linkage system 42 to exhibit the adjusted operating setting. The step of controlling the implement linkage system 42 is generally indicated by box 234 in FIG. 5. The controller 100 may control the implement linkage system 42, for example, by opening and/or closing respective fluid control valves for the lift cylinder 54, the left float cylinder 66 and/or the right float cylinder 70 as needed to implement the adjusted operating setting.

The agricultural machine 20 and the process describe above provide the operator with feedback notifying the operator of the selected operating condition so that the operator may ensure that the operating settings for the selected work implement 44 are properly set. Additionally, by automatically determining the recommended operating setting with the controller 100, the operator does not need to search for or guess the recommended settings each time a different work implement is attached to the agricultural machine 20.

As used herein, "e.g." is utilized to non-exhaustively list examples and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. An agricultural machine (20) comprising:
a frame (22);
an implement linkage system (42) attached to the frame (22) and configured for attaching a selected work implement from a plurality of different work implements to the frame (22);
wherein the implement linkage system (42) is controllable between a float operating condition allowing the selected work implement to vertically track a ground surface during horizontal movement over the ground surface, and a fixed height operating condition fixing a position of the selected work implement relative to the frame (22) during horizontal movement over the ground surface;
an output (94) operable to convey a message to an operator;
an input (96) operable to receive instructions from the operator;
a controller (100) including a processor (102) and a memory (104) having an implement attachment and control algorithm (106) stored thereon, wherein the processor (102) is operable to execute the implement attachment and control algorithm (106) to:
identify the selected work implement from the plurality of different work implements;
solicit a desired operating condition from the operator via the output (94), wherein the desired operating condition is one of the float operating condition or the fixed height operating condition;
receive a selection command from the operator via the input (96) indicating which of the float operating condition and the fixed height operating condition is the desired operating condition;
automatically determine a recommended operating setting for the implement linkage system (42) for the selected work implement and the desired operating condition from a database including a respective recommended operating setting for each of the plurality of different work implements; and
notify the operator of the recommended operating setting for the implement linkage system (42) for the selected work implement and the desired operating condition via the output (94).

2. The agricultural machine (20) set forth in claim 1, further comprising an attachment identifier (98) in communication with the controller (100) and operable to identify the selected work implement from the plurality of different work implements.

3. The agricultural machine (20) set forth in claim 1 or 2, wherein the processor (102) is operable to execute the implement attachment and control algorithm (106) to solicit instructions from the operator via the output (94) regarding a desired attachment identification technique for identifying the selected work implement, wherein the desired attachment identification technique is one of an automatic technique using the attachment identifier (98), or a manual entry technique.

4. The agricultural machine (20) according to at least one of the claims 1 to 3, wherein the processor (102) is operable to execute the implement attachment and control algorithm (106) to engage the attachment identifier (98) to identify the selected work implement when the operator selects the automatic technique.

5. The agricultural machine (20) according to at least one of the claims 1 to 4, wherein the processor (102) is operable to execute the implement attachment and control algorithm (106) to request identification data related to the selected work implement from the operator via the output (94) when the operator selects the manual entry technique.

6. The agricultural machine (20) according to at least one of the claims 1 to 5, wherein the processor (102) is operable to execute the implement attachment and control algorithm (106) to receive the identification data via the input (96) from the operator.

7. The agricultural machine (20) according to at least one of the claims 1 to 6, wherein the processor (102) is operable to execute the implement attachment and control algorithm (106) to solicit a desired adjustment of the recommended operating setting from the operator via the output (94).

8. The agricultural machine (20) according to at least one of the claims 1 to 7, wherein the processor (102) is operable to execute the implement attachment and control algorithm (106) to receive a commanded adjustment to the recommended operating setting from the operator via the input (96) to define an adjusted operating setting.

9. The agricultural machine (20) according to at least one of the claims 1 to 8, wherein the processor (102) is operable to execute the implement attachment and control algorithm (106) to control the implement linkage system (42) to exhibit the adjusted operating setting.

10. The agricultural machine (20) according to at least one of the claims 1 to 9, wherein the processor (102) is operable to execute the implement attachment and control algorithm (106) to receive an apply recommended operating setting command from the operator via the input (96) when no adjustment to the recommended operating setting is requested.

11. The agricultural machine (20) according to at least one of the claims 1 to 11, wherein the processor (102) is operable to execute the implement attachment and control algorithm (106) to control the implement linkage system (42) to exhibit the recommended operating setting in response to the apply recommended operating setting command.

12. The agricultural machine (20) according to at least one of the claims 1 to 11, wherein the implement linkage system (42) includes a lift cylinder (54) for controlling a height of the selected work implement during operation in the fixed height operating condition, and a left float cylinder (66) coupled to a left accumulator (72) and a right float cylinder (70) coupled to a right accumulator (76) for controlling float of the selected work implement during operation in the float operating condition, with the lift cylinder (54), the right float cylinder (70), and the left float cylinder (66) controlled by the controller (100).

13. A method of controlling an agricultural machine (20) including a implement linkage system (42) attached to a frame (22), wherein the implement linkage system (42) is configured for attaching a selected work implement from a plurality of different work implements to the frame (22), and wherein the implement linkage system (42) is controllable between a float operating condition allowing the selected work implement to vertically track a ground surface during horizontal movement over the ground surface, and a fixed height operating condition fixing a position of the selected work implement relative to the frame (22) during horizontal movement over the ground surface, the method comprising:
identifying the selected work implement from the plurality of different work implements;
soliciting a desired operating condition from an operator via an output (94), wherein the desired operating condition is one of the float operating condition or the fixed height operating condition;
receiving a selection command from the operator via an input (96) indicating which of the float operating condition and the fixed height operating condition is the desired operating condition;
automatically determining a recommended operating setting for the implement linkage system (42) for the selected work implement and the desired operating condition from a database with a controller (100), wherein the database includes a respective recommended operating setting for each of the plurality of different work implements; and
notifying the operator of the recommended operating setting for the implement linkage system (42) for the selected work implement and the desired operating condition via the output (94).

14. The method set forth in claim 13, wherein the agricultural machine (20) includes an attachment identifier (98) in communication with the controller (100), and wherein the method further comprises soliciting instructions from the operator via the output (94) regarding a desired attachment identification technique for identifying the selected work implement, wherein the desired attachment identification technique is one of an automatic technique using the attachment identifier (98), or a manual entry technique.

15. The method set forth in claim 13 or 14, further comprising soliciting a desired adjustment of the recommended operating setting from the operator via the output (94).
